# EUROPÄISCHE PATENTANMELDUNG

(11) **EP 0 837 394 A2**
(43) Veröffentlichungstag der Anmeldung: **22.04.1998**
(21) Anmeldenummer: 97118020.3
(22) Anmeldetag: 17.10.1997
(51) Int. Cl.: G06F 11/20

(54) **Ausfallsicheres Bussystem**

(30) Priorität: 18.10.1996 DE 19643092
(71) Anmelder: Elan Schaltelemente GmbH, D-35435 Wettenberg (DE)
(72) Erfinder: Kramer, Manfred, 35396 Giessen (DE); Ziegler, Olaf, 56379 Geilnau (DE); Schneider, Volkmar, 35719 Angelburg (DE); Thüringer, Rainer, Prof. Dr., 35398 Giessen (DE)
(74) Vertreter: Stoffregen, Hans-Herbert, Dr. Dipl.-Phys.

(57) **Zusammenfassung**

Gegenstand der Erfindung ist ein serielles Bussystem mit zwei Datenleitungen (10, 12), an die an einem Ende ein zentraler Busteilnehmer (14) und am anderen Ende ein aktiver Busteilnehmer (16) angeschlossen sind. Der zentrale und der aktive Busteilnehmer senden Statusmeldungen auf den Bus (10, 12), von denen die Busleitungen in den Busteilnehmern (18, 20) zwischen den beiden Enden physisch durchgeschleift sind. Bei Ausbleiben der Statusmeldungen oder Fehler anzeigenden Statusmeldungen versetzt der zentrale Busteilnehmer (14) das Bussystem in einen Fail-Safe-Zustand.

## Beschreibung

Die Erfindung bezieht sich auf ein Bussystem.

Busse verbinden über elektrische Übertragungsleitungen Teilnehmer miteinander. Die Anschlussstellen der Busteilnehmer sind an beliebigen Orten längs der Übertragungsleitungen angeordnet. Die Übertragungsleitung eines seriellen Busses kann eine verdrillte Zweidrahtleitung oder eine Koaxialleitung sein. Busse haben einen erheblichen Kostenvorteil gegenüber konventioneller Verdrahtungstechnik und eine Vielfalt an zentral verfügbaren Informationen sowie Flexibilität. Serielle Busse sind beispielsweise unter der Bezeichnung Profibus, Bitbus usw. bekannt. Die Teilnehmer sind z.B. Ein-, Ausgabemodule für Sensorsignale und/oder Stellelemente bzw. Aktoren.

Für die Übertragung sicherheitsgerichteter Signale können nur Busse bzw. Bussysteme eingesetzt werden, die fehlertolerant bzw. redundant aufgebaut sind. Sicherheitsgerichtete Signale sind solche, die sicherheitstechnische Zwecke oder Auflagen erfüllen, um gefährliche Zustände für Personen oder Schäden durch elektrische Ausrüstungen zu vermeiden bzw. rasch zu beseitigen. Ein redundantes Datenbussystem, das sicherheitstechnischen Anforderungen genügt, ist aus der DE-Z, messen prüfen automatisieren, 10/95, Seite 10, 12 - 14 und 16 bekannt. Bei diesem bekannten Datenbussystem sind ein fehlersicherer Automatisierungsprozessor und Teilnehmer über zwei Busschnittstellen miteinander verbunden. Der fehlersichere Automatisierungsprozessor besteht aus zwei Prozessorsystemen, jeweils mit eigenem Mikroprozessor, Speicher und Systembus. Die beiden Prozessorsysteme bearbeiten taktsynchron das gleiche Programm. Ein in bestimmten Zeitintervallen auf einwandfreie Funktion überprüfter Vergleicher überwacht die beiden Prozessorsysteme. Wird ein Fehler in einem Prozessorsystem festgestellt, werden die Ausgänge aller Teilnehmer auf ein definiertes Signal eingestellt, was das Versetzen aller von den Teilnehmern gesteuerten Aktoren in einen vorbestimmten Sicherheitszustand bewirkt. Die fehlersicheren Automatisierungsprozessoren sind über zwei Automatisierungsprozessoren mit einem Anlagenbus verbunden. Von den beiden Automatisierungsprozessoren, die jeweils gleiche Komponenten aufweisen, muss nur einer funktionstüchtig sein. Die Automatisierungsprozessoren arbeiten im Master-Reserve-Betrieb. Um einen Fehler im System sicher zu erkennen, werden neben Selbsttests die Kommunikationsverbindungen und weitere Hardwarekomponenten zyklisch geprüft. Im Fehlerfall wird der defekte Automatisierungsprozessor in einen definierten Stop-Zustand versetzt.

Eine Systemabschaltung aufgrund eines festgestellten Fehlers bedeutet, dass die Maschinen, Fertigungsanlagen und ähnliches in einen für Personen ungefährlichen Zustand versetzt werden. Ein Fehler muss innerhalb einer Fehlerreaktionszeit von zum Beispiel 20 ms erkannt werden; und innerhalb dieser Zeit muss auch die Not-Abschaltung der elektrischen Ausrüstung erfolgen.

Eine vollständig doppelte Busausführung erfordert nicht nur die doppelte zweikanalige Ausführung der Bus-Module für die Sensoren sowie 2 Bus-Master zur Systemüberwachung und fehlersicherer Abschaltung, sondern auch die Verlegung zweier unabhängiger Leitungssysteme. Durch die doppelte Busausführung wird ein entscheidender Vorteil eines Bussystems gegenüber herkömmlicher Einzelverdrahtung zum Beispiel jedes Sensorschalters teilweise wieder zunichte gemacht. Man kann den doppelten Leitungsaufwand vermeiden, indem man eine einzelne Busleitung zwangsdynamisiert. Man spricht in diesem Fall von dynamischer Redundanz, ein bereits bekanntes Verfahren. Die Dynamisierung bedeutet, dass alle Bus-Module ständig zyklisch auf Funktionstüchtigkeit und Meldezustand von dem auswertenden Master abgefragt werden (Master-Slave-System) oder sich selbständig regelmäßig melden (Multi-Master-System).

Bei Multi-Master-Bussystemen können sich die Bus-Module (z.B. bei Schalter-Betätigung) sofort, d.h. im µsec-Bereich selbständig melden (sog. Echtzeitfähigkeit), so dass für die sicherheitstechnische Überwachung einer Anlage keine ständige Modulabfrage nötig wäre. Um jedoch auch einen Fehler im überwachenden Bussystem selbst, z.B. den Ausfall eines Bus-Modules innerhalb der Fehletreaktionszeit (z.B. 20 ms s.o.) zu erkennen, überpüft man alle Bus-Module-Teilnehmer in diesem Zeitraum je mindestens 1 x auf ihren Funktions-Zustand. Da zur Gewährleistung einer hohen Datenübertragungssicherheit (Hamming-Distanz 4) die Meldungen jeweils aus umfangreichen Datenprotokollen bestehen (50 ... 80 bit), bedeutet diese Dynamisierung somit einen mit der Teilnehmerzahl proportional steigenden Datenfluss (Datenübertragungsrate) zur System-Überwachung.

Andererseits ist die Datenübertragungsrate eines Bussystems wegen der Signallaufzeiten (Leitungslänge) sowie der Modul-Reaktionszeiten (Teilnehmerzahl) begrenzt.

Es besteht also ein Konflikt zwischen dem Wunsch nach größeren Leitungslängen (z.B. 100 ... 300 m) und vielen Busteilnehmern z.B. 50 ... 100 auf der einen Seite sowie dem technischen Aufwand zur Übertragung und Auswertung höherer Datenübertragungsraten (typisch 125 ... 1000 k bit/s) andererseits.

Zur Verringerung der Datenübertragungsrate bietet sich die Möglichkeit an, die Bus-Module, die in einem Sicherheitsbus ohnehin doppelt (zweikanalig/redundant) vorgesehen sind, sich gegenseitig paarweise auf fehlerfreie Funktion überwachen zu lassen, so dass nur bei interner Differenz ein Teilnehmer eines Bus-Modul-Paares eine Bus-Fehler-Meldung abgeben muss. Dieses Verfahren setzt aber voraus, dass die Busleitung zwischen dem auswertenden Master und jedem Modul jederzeit fehlerfrei und voll funktionsfähig ist. Da die Leitung nicht doppelt und räumlich getrennt ausgeführt sein soll, muss die Leitung selbst dynamisch überprüft werden, und zwar bis zu allen Busteilnehmern. Ein Leitungsfehler muss innerhalb der Fehlertoleranzzeit erkannt werden. Die zyklische Überprüfung aller Busteilnehmer erfordert wegen des hohen Datenübertragungsaufwands eine so große Zeit, daß die notwendige Fehlerreaktionszeit nicht mehr eingehalten bzw. unterschritten werden kann.

Bekannt ist auch ein lokales Netzwerk, bei dem aus Redundanzgründen zwei serielle Bussysteme vorgesehen sind, an die Netzknoten angeschlossen sind. Jeder Netzknoten ist durch zwei getrennte Ankopplungen mit den beiden Bussen verbunden. In einem der Bussysteme werden im fehlerfreien Betrieb Prozessdaten übertragen und im anderen Bussystem Statusinformationen. Jede Ankopplung enthält wenigstens einen Kommunikations-Controller, eine Kommunikations-CPU und einen Transceiver. Jede Kommunikations-CPU überwacht in einem Netzknoten die Funktionsfähigkeit der anderen Kommunikations-CPU und erfüllt die Funktion eines Watchdog-Prozessors. Leitungsfehler sowie Fehlfunktionen von Kommunikations-Controllern wirken sich als Verfälschung von Busnachrichten aus und werden durch Fehlererkennungsmechanismen entdeckt. Fehler, die in den Komponenten zwischen Bus und Kommunikations-CPU auftreten, werden durch eine zyklische Funktionsüberwachung der Komponenten festgestellt. Jeder Bus wird im Fehlerfall als Watchdogbus benutzt, um im jeweils anderen Bussystem aufgetretene Fehler den Netzteilnehmern mitzuteilen. Bei einem Fehler in demjenigen Bus, in dem die Prozessdaten übertragen werden, wird der Bus gesperrt und der Prozessdatenverkehr wird über den anderen Bus abgewickelt (DE 195 09 558 A1).

Der Erfindung liegt das Problem zugrunde, ein Bussystem bereitzustellen, das bei geringem Aufwand für sicherheitsgerichtete Signale und zahlreiche Busteilnehmer sowie große Busleitungslängen geeignet ist und bei einem Fehler eine kurze Reaktionszeit aufweist, wobei mit einfachen Maßnahmen überprüft werden soll, ob ein Leitungsfehler vorliegt.

Das Problem wird erfindungsgemäß insbesondere gelöst durch ein Bussystem umfassend einen ein Übertragungsmedium aufweisenden seriellen Datenbus mit an einem Ende vorhandenen ersten aktiven Busteilnehmer und am anderen Ende vorhandenen zweiten aktiven Busteilnehmer sowie von dem Übertragungsmedium physisch durchgeschleifte weitere Busteilnehmer, wobei zumindest der erste aktive Busteilnehmer und/oder der zweite aktive Busteilnehmer jeweils eine Anordnung zum regelmäßigen Aussenden und/oder Empfangen von Statusmeldungen aufweist, wobei zumindest von einem der Busteilnehmer die von einem anderen Busteilnehmer ausgehenden Statusmeldungen auf Ausbleiben innerhalb einer vorgegebenen Zeitspanne oder auf Abweichung von einer einem fehlerfreien Zustand des Bussystems zugeordneten Form überprüft werden und wobei dann, wenn der Empfang der Statusmeldungen innerhalb der vorgegebenen Zeitspanne ausbleibt oder Statusmeldungen empfangen werden, die von einer einen fehlerfreien Zustand des Bussystems zugeordneten Form abweichen, das Bussystem in einen Zustand versetzt wird, der ein vorgegebenes Sicherheitskriterium erfüllt.

Bei dem erfindungsgemäßen Bussystem müssen nicht mehr alle Busteilnehmer für die Überprüfung abgefragt werden, da insbesondere die Möglichkeit besteht, dass der zweite aktive Busteilnehmer (Bus-Abschlussteilnehmer, Abschluss-Modul) die Überwachungsfunktion des Übertragungsmediums übernimmt. Dieser Vorteil kommt insbesondere bei allen Bussystemen zum Tragen, die mit aktiven Multi-Master-Modulen in redundanter Ausführung arbeiten, obwohl der Bus einkanalig sein kann. Der erste aktive zentrale Busteilnehmer bzw. Bus-Master sendet mit sehr hoher Taktrate im Bereich von 10 bis 20 ms über alle Busteilnehmer zum zweiten aktiven Busteilnehmer Statusmeldungen und kann mit einer gleich hohen Taktrate die oder sonstige geeignete Statusmeldungen bei einwandfreiem Übertragungsmedium zurücksenden. Alternativ besteht die Möglichkeit, dass der zweite aktive Busteilnehmer unabhängig von vom ersten aktiven Busteilnehmer ausgehenden Signalen Statusmeldungen zum ersten aktiven Busteilnehmer sendet.

Unabhängig wie die von dem zweiten aktiven Busteilnehmer gesendeten Statusmeldungen ausgelöst werden, kann das Übertragungsmedium auf seinen ordnungsgemäßen Zustand überprüft werden. Das Übertragungsmedium kann daher innerhalb der Erstfehlereintrittszeit, die möglichst kurz zu halten ist, überprüft werden. Die Prüfdatenübertragung für den Bus findet also im wesentlichen zwischen den Busteilnehmern an den Busleitungsenden statt, so daß die Anzahl der Teilnehmer die Zeit, mit der die Prüfdaten den Bus durchlaufen, nur in einem vernachlässigbaren Umfang beeinflusst. Bei dem erfindungsgemäßen Bussystem sind die Busteilnehmer zwischen dem zentralen Busteilnehmer bzw. Busmodul an einem Ende und dem aktiven Busteilnehmer bzw. Busmodul am anderen Ende des Busses nicht durch Stichleitungen mit dem Übertragungsmedium verbunden. Das Übertragungsmedium weist insbesondere zwei Leitungsadern auf. Hierunter ist auch ein Übertragungsmedium mit einer ersten Ader und einer leitenden Verbindung über Masse zu verstehen, die die zweite Ader bildet. Der Bus verläuft also bei der erfindungsgemäßen Anordnung vom ersten aktiven bzw. zentralen Busteilnehmer bzw. Busmodul, im folgenden auch Bus-Master genannt, durch alle Bus-Teilnehmer im folgenden auch Slaves genannt, physisch hindurch und wird am Ende mit dem zweiten aktiven Busmodul, auch Abschluss-Modul, versehen. Der Bus wird also nur als ein galvanisch von einem zum anderen Ende verlaufender Strang ausgeführt. Da Stichleitungen zu den Slaves entfallen, hat der Bus auch einen höheren Wirkungsgrad.

Es ist vorgesehen, dass der erste aktive Busteilnehmer die Statusmeldungen des zweiten aktiven Busteilnehmers überwacht und umgekehrt und dass die weiteren Busteilnehmer die von den anderen Busteilnehmern ausgehenden Statusmeldungen oder Statusmeldungen, die von einer einen fehlerfreien Zustand des Übertragungsmediums zugeordneten Form abweichen, überwachen.

Vorzugsweise umfassen zumindest einige der Busteilnehmer zwei sich gegenseitig überwachende Einheiten.

Es ist zweckmäßig, zumindest einige, vorzugsweise sämtliche Busteilnehmer jeweils als Module mit zwei Einheiten auszubilden, die an Sensoren und/oder Aktoren angeschlossen sind und sich gegenseitig überwachen. Bei dieser Ausführungsform sind die Busteilnehmer redundant aufgebaut. Durch diesen Aufbau in Verbindung mit der Überwachung muss in den Busteilnehmern nicht mit einem Erstfehler gerechnet werden, d.h. diese Busteilnehmer können sicherheitstechnisch großzügiger dimensioniert werden.

Der Bus-Master ist grundsätzlich das erste Gerät im Strang, das Busabschluss-Modul grundsätzlich das letzte Gerät im Strang. Bus-Master und Busabschluss-Modul haben jeweils nur einen Busanschluss, alle anderen Bus-Module jeweils genau einen Buseingang und einen Busausgang.

Der Bus-Master als erstes Gerät und der Bus-Abschluss als letztes Gerät im Strang senden und/oder empfangen mit einer hohen Übertragungsrate (z.B. alle 10 ms) Statusmeldungen, die vorzugsweise voneinander unabhängig sind. Diese werden von allen Busteilnehmern kontrolliert.

Der zentrale Busteilnehmer ist zweckmäßigerweise zweikanalig aufgebaut. Unter zweikanaligem Aufbau ist hierbei ein Aufbau aus zwei gleichen Einheiten zu verstehen. Die zwei gleichen Einheiten haben insbesondere einen gemeinsamen fehlersicheren Vergleicher, der Ausgänge z.B. zu einer Relaisebene oder einer äquivalent sicheren Abschaltebene aufweist, mit der vorzugsweise elektrische Verbraucher ein- und ausgeschaltet werden. Im Falle einer Relaisebene hat diese insbesondere zwangsgeführte Relais.

Bei Ausbleiben der Nachrichten oder fehlerhaften Meldungen über eine festgelegte Fehlertoleranzzeit hinaus (z.B. 15 ms) muss von einer gestörten Busleitung oder einem defekten Busteilnehmer ausgegangen werden. Das System geht dann in einen sicheren Zustand über.

Das physische Durchschleifen der Busleitung beinhaltet einen Fehlerausschluss innerhalb des Bus-Modules zwischen Busleitung und zweikanaligem Bus-Modul (da kein logisches datenflussmäßiges Durchschleifen vorgesehen ist). Dies wird erreicht durch elektro-mechanische Maßnahmen:

Die eingehende Busader der Busleitung ist insbesondere als wenigstens eine Leiterbahn auf einer Leiterplatte im zweikanalig aufgebauten Busteilnehmer ausgebildet. Die Busleitung ist auf dieser Leiterplatte über geätzte, flächige Leiterbahnen durchgeschleift. Zweckmäßigerweise sind auf der gleichen Leiterplatte zweikanalig ausgeführte Bus-Controller-Bausteine vorgesehen, die an die Leiterbahn unmittelbar, aber unabhängig voreinander über kurze Stichleiterbahnen angeschlossen sind. Beide Bus-Controller-Bausteine überwachen sich gegenseitig. Die galvanische Verbindung in der Busleitung ist so ausgebildet, daß die gleichzeitige elektrische Abtrennung beider Bus-Controller von der durchgeschleiften Busleitung ausgeschlossen ist.

Die Leiterbahnführung auf der Leiterplatte ist so ausgelegt, dass auch bei einem evtl. Durchbohren der Leiterplatte ein gleichzeitiges Durchtrennen der Stichleiterbahnen zwischen Bus und beiden Controller ausgeschlossen ist, bzw. bei diesem Vorgang auch die durchgeschleifte Busleitung mit zerstört wird.

Dieser Fehler würde dann innerhalb der Erstfehlererkennungszeit von 15 ms vom Bussystem erkannt werden.

Weitere Einzelheiten, Merkmale und Vorteile der Erfindung ergeben sich nicht nur aus den Ansprüchen und den diesen zu entnehmenden Merkmalen -für sich und/oder in Kombination-, sondern auch aus der folgenden Beschreibung eines bevorzugten Ausführungsbeispiels.

Es zeigen:
- Fig. 1: ein Blockschaltbild eines seriellen Datenbus-Systems, mit dem sicherheitsgerichtete Signale übertragen bzw. verarbeitet werden,
- Fig. 2: ein Blockschaltbild eines zentralen Busteilnehmers,
- Fig. 3: ein als Eingangsmodul ausgebildeter Busteilnehmer im Blockschaltbild,
- Fig. 4: ein als Ausgangsmodul ausgebildeter Busteilnehmer im Blockschaltbild.

Ohne die Erfindung einschränken zu wollen, wird in dem Ausführungsbeispiel ein serierelles Bussystem mit einem Übertragungsmedium beschreiben, das zwei gleiche Leitungsadern 10, 12 zur Bildung einer Datenleitung umfasst. (Alternativ könnte jede Leitungsader 10, 12 eine Datenleitung 10', 12' sein). An den einen Enden der Leitungsadern 10, 12 ist ein zentraler Busteilnehmer 14 als erster aktiver Busteilnehmer angeschlossen. Der zentrale Busteilnehmer 14 wird im folgenden auch Bus-Master 14 genannt, da er zentrale Busverwaltungsaufgaben ausführt. An den anderen Enden der beiden Leitungsadern 10, 12 ist ein zweiter aktiver Busteilnehmer 16 angeschlossen, der auch als Abschlussbusteilnehmer 16 oder Abschluss-Modul 16 bezeichnet wird. Mit den Leitungsadern 10, 12 sind Bus-Teilnehmer verbunden, von denen in der Zeichnung zwei Busteilnehmer 18, 20 dargestellt sind. Die auch als Slaves bezeichneten Bus-Teilnehmer 18, 20 können an beliebigen Stellen längs der Leitungsadern 10, 12 angeordnet sein, die als Feld-Busse z.B. in einer technischen Anlage verlegt sind. Der Bus-Master 14, der Abschluss-Busteilnehmer 16 und die Busteilnehmer 18, 20 sind zweikanalig ausgebildet, d.h. es sind im Bus-Master 14 zwei vorzugsweise gleiche Einheiten A0, B0, im aktiven Busteilnehmer 16 zwei vorzugsweise gleiche Einheiten A_{N}, B_{N} und in den anderen Busteilnehmern 18, 20 jeweils zwei vorzugsweise gleiche Einheiten A1, B1 und A2, B2 vorhanden. Auf den Leitungsadern 10, 12 werden insbesondere sicherheitsgerichtete Signale in digitaler Form übertragen. Der Bus-Master 14 ist grundsätzlich das erste Gerät bzw. Modul am jeweiligen seriellen Bus und hat für jede Leitungsader 10, 12 einen Busanschluss 22, 24. Der aktive Busteilnehmer 16 ist grundsätzlich das letzte Gerät am Bus und hat für jede Datenleitung nur einen Busanschluss 26, 28. Alle anderen Busteilnehmer 18, 20 haben für jede Datenleitung jeweils einen Buseingang 30, 32 bzw. 34, 36 und einen Busausgang 38, 40 bzw. 42, 44. Die Datenleitung bzw. die Datenleitungen 10', 12' sind in den Busteilnehmern 18, 20 physisch durchgeschleift. In der Zeichnung sind die durchgeschleiften Leitungsadern 10, 12 in bezug auf den Busteilnehmer 18 (Slave 18) mit 46, 50 und in Bezug auf den Busteilnehmer 20 (Slave 20) mit 52, 54 bezeichnet. Außerhalb der Busteilnehmer kann die Busleitung als koaxiale oder verdrillte Leitungen verlegt sein.

Die elektrischen Verbindungen 46, 50 und 52, 54 sind in den Slave-Modulen 18, 20 vorzugsweise auf Leiterplatten als geätzte, flächige Leiterbahnen ausgebildet und verlaufen zwischen den Buseingängen 30, 32 und den Busausgängen 38, 40 bzw. zwischen den Buseingängen 34, 36 und den Busausgängen 42, 44. Auf den gleichen, nicht näher dargestellten Leiterplatten sind intelligente Bus-Controller-Bausteine 56, 58 bzw. 60, 62 in den Einheiten A1, B1, A2, B2 angeordnet. Die Bus-Controller-Bausteine 56 bis 62 sind jeweils an die elektrischen Verbindungen 46, 50 bzw. 52, 54 unmittelbar über Stichleiterbahnen bzw. Stichleitungen 64, 66, 68, 70 bzw. 72, 74, 76, 78 aber unabhängig voneinander angeschlossen. Die beiden Bus-Controller-Bausteine 56, 58 bzw. 60, 62 in jedem der Busteilnehmer 18, 20 überwachen sich gegenseitig. Von den Einheiten A1, B1, A2, B2 ...A_{N}, B_{N} gehen elektrische Verbindungen zu Sensoren und/oder Aktoren in der jeweiligen Maschine oder Anlage aus. Diese an den jeweiligen Einheiten A1, B1, A2, B2...A_{N}, B_{N} insgesamt mit 80, 82, 84, 86, 88 und 90 bezeichneten Verbindungen sind aus Redundanzgründen vorzugsweise jeweils zweikanalig zu den Sensoren bzw. Aktoren verlegt. Durch die Anordnung der Verbindungen 46, 50, 52, 54 und der Stichleitungen 64, 66, 68, 70, 72, 74, 76, 78 auf den Leiterplatten der Busteilnehmer 18, 20 wird ausgeschlossen, dass beide Bus-Controller-Bausteine 58, 56 bzw. 60, 62 im jeweiligen Busteilnehmer 18, 20 gleichzeitig elektrisch von der durchgeschleiften Datenleitung (Übertragungsmedium) abgetrennt werden können. Die Leiterbahnführung ist deshalb auf der Leiterplatte des jeweiligen Busteilnehmers 18, 20 so ausgebildet, dass auch bei einem eventuellen Durchbohren der Leiterplatte ein gleichzeitiges Durchtrennen der Stichleiterbahnen bzw. Stichleitungen 64, 66, 68, 70 bzw. 72, 74, 76, 78 ausgeschlossen ist bzw. bei einem solchen Vorgang auch die durchgeschleifte Datenleitung bzw. das Übertragungsmedium zerstört wird. Auch im zweiten aktiven Busteilnehmer 16 sind in den Einheiten A_{N}, B_{N} Bus-Controller-Bausteine 92, 94 vorhanden, die sich gegenseitig überwachen und über nicht näher bezeichnete Stichleitungen, die den oben im Zusammenhang mit den Busteilnehmern 18, 20 erwähnten Bedingungen gehorchen, jeweils mit den Busanschlüssen 26, 28 verbunden. Im zentralen Busteilnehmer 14 bzw. Bus-Master sind die beiden Einheiten A0, B0 über nicht näher bezeichnete Stichleitungen, die den oben im Zusammenhang mit den Leitungen der Busteilnehmer 18, 20 erwähnten Bedingungen gehorchen, mit den Busanschlüssen 22, 24 verbunden.

Die von den beiden gleichartigen Einheiten A0, B0 erzeugten Ergebnisse bzw. Signale in bezug auf die Busüberwachung werden über eine galvanisch getrennte Verbindung 96 wie Opto-Koppler der jeweils anderen Einheit zugeführt, indem die von den Einheiten A0 und B0 erzeugten Signale auf Gleichheit und Gleichzeitigkeit überwacht werden. Der fehlersichere Vergleicher besteht aus den gleichartigen Einheiten A0, B0, der galvanisch getrennten Verbindung 96 wie Opto-Koppler und der Relais K1, K2 oder einer vergleichbaren Schaltung und steuert eine nicht näher dargestellte Ausgangsebene, die in der Stromzuleitung des jeweiligen Geräts bzw. der Maschine oder Anlage angeordnet sind und bei Ansteuerung durch den Vergleicher die Energiezufuhr unterbrechen, um damit das Gerät, die Maschine oder technische Anlage in einen sicheren Zustand zu überführen. Die Relais oder Schütze haben zwangsgeführte Kontakte, eine Eigenschaft, bei der Kontakte der beiden Relaiszustände, d.h. Arbeits- und Ruhekontakte, nicht gleichzeitig geöffnet bzw. geschlossen sein können, bzw. eine gleichwertige Auswertelektronik.

Der zentrale Busteilnehmer 14 (Bus-Master) und der aktive Busteilnehmer 16 senden und/oder empfangen mit einer hohen Übertragungsrate z.B. periodisch, Statusmeldungen über die Datenleitungen 10, 12. Die Periode kann z.B. 10 ms betragen. Die Statusmeldungen, die insbesondere Daten in digitaler Form sind, gelangen zu den Busteilnehmern 18, 20 und werden von diesen auf Gleichheit bzw. Übereinstimmung mit einer vorgegebenen Statusinformation verglichen. Weiterhin überprüfen vorzugsweise sämtliche, insbesondere die Busteilnehmer 18, 20, 16, ob die Statusmeldungen innerhalb einer vorgebenen Fehlertoleranzzeit übertragen bzw. empfangen werden. Wenn die Statusmeldungen nicht innerhalb der Fehlertoleranzzeit von z.B. 15 ms oder wenn fehlerhafte Meldungen empfangen werden, muss von einer gestörten Busleitung bzw. einem defekten Busteilnehmer ausgegangen werden. Die Störung wird zumindest in einem der Busteilnehmer erkannt. Jeder der die Störung feststellende Busteilnehmer wie Bus-Master 14, Abschluss-Modul 16 oder Busteilnehmer 18 oder 20 kann bei einem festgestellten Fehler den Übergang des Systems bzw. des Geräts oder der Anlage in einen sicheren Zustand veranlassen. Der sichere Zustand ist z.B. der Stillstand des technischen Systems, des Geräts, der Maschine oder der Anlage bzw. die Außerbetriebnahme durch Abschaltung der Betriebsenergie, d.h. es wird nach dem Fail-Safe-Prinzip verfahren.

Allgemein ausgedrückt werden nach Feststellung einer Störung in einem gefahrbringenden Bereich gefahrbringende Aktiviäten wie Bewegungen, Strahlungen etc. unverzüglich unterbunden.

Die Fehlerreaktionszeit ist bei der oben beschriebenen Anordnung auch bei einer Periode von z.B. 10 ms der Statusmeldungen ausreichend kurz, um die Sicherheitsanforderungen zu erfüllen. Ein Fehler wird innerhalb der Erstfehlererkennungszeit von z.B. 15 ms vom zentralen Busteilnehmer erkannt.

Die Statusmeldungen werden periodisch vom Abschluss-Modul 16 und/oder vom Bus-Master 14 ausgesendet und von den verbleibenden Busteilnehmern 20, 18, 14 bzw. 18, 20, 16 ausgewertet. Auf diese Weise werden Laufzeiten über die doppelte Länge des jeweiligen Busses vermieden. Falls das Übertragungsmedium unterbrochen oder kurzgeschlossen ist, werden Statusmeldungen nicht von allen Busteilnehmern 14, 16, 18, 20 empfangen, wodurch sofort ein Fehler erkennbar ist. Zumindest einer der den Fehler feststellende Busteilnehmer 14, 16, 18, 20 löst dann die Stillsetzung des Bussystems und z. B. auch weiterer Verbraucher aus, die vom Bussystem gesteuert werden.

In den Busteilnehmern 18, 20, die als Eingabe-, Ausgabemodule ausgebildet sind, und im aktiven Busteilnehmer 16 kontrollieren sich die intelligenten Bus-Controller-Bausteine 58, 56, 60, 62 und 92, 94 gegenseitig und erzeugen bei einem im jeweils anderen Baustein festgestellten Fehler sofort eine entsprechende Meldung, die auf die verbleibenden Busteilnehmer übertragen wird.

Das oben beschriebene Bussystem ist für lange Busleitungen mit zahlreichen Busteilnehmern geeignet. Die Fehletreaktionszeit ist auch bei vielen Teilnehmern und langen Busleitungen kurz, so dass die Sicherheitsanforderungen eingehalten werden. Der Bus-Master 14 und/oder Abschluss-Modul 16 senden regelmäßig Meldungen zur Leitungsprüfung aus, die von den übrigen Busteilnehmern 16, 18, 20 empfangen werden. Die Periode dieser Signale ist z.B. 10 ms.

Unabhängig davon besteht die Möglichkeit, dass der Bus-Master 14 regelmäßige Signale aussendet, die von dem Abschluss-Modul 16 empfangen und zurückgesendet werden bzw. Rückmeldungen generiert werden. Die Funktion von Bus-Master 14 und Abschluss-Modul 16 kann dabei vertauscht werden.

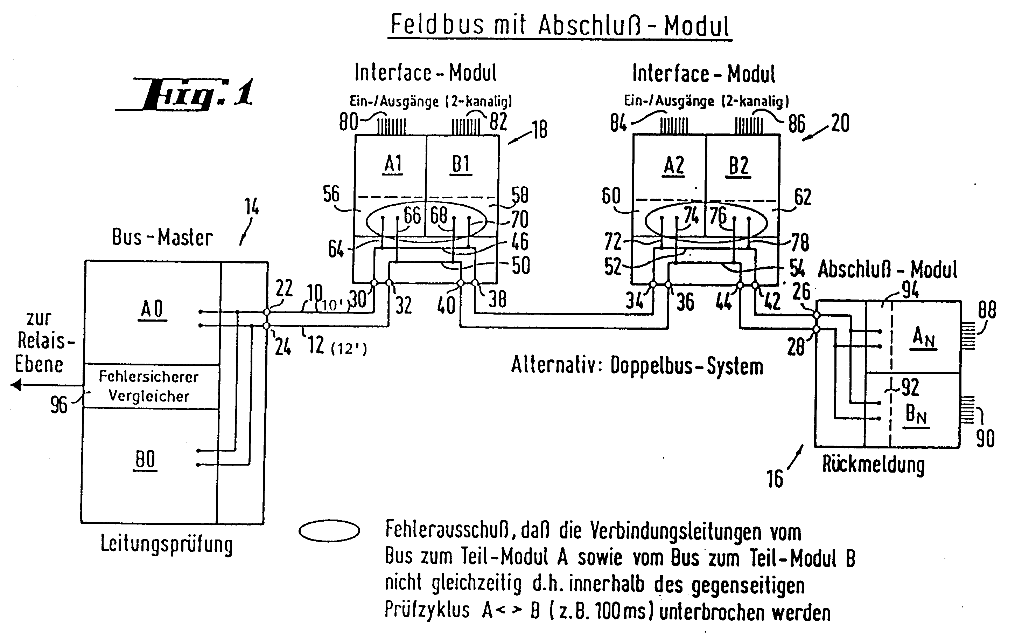

Mit den Bezugszeichen 10, 12 wurden oben jeweils die Leitungsadern einer Datenleitung eines Busses bezeichnet. Die obigen Überlegungen gelten auch für einen doppelt ausgelegten Bus, wobei unter 10', 12' dessen beide Übertragungsmedien zu verstehen sind, d.h. die Bezugszeichen 10', 12' bezeichnen bei einer Anordnung mit zwei Bussen jeweils einen Bus. Die Busse 10', 12' können jeweils zwei Leitungen aufweisen. In Fig. 1 wurde dieser Sachverhalt durch Hinzufügung der Bezugszeichen 10', 12' in Klammern zu den Bezugszeichen 10, 12 angedeutet. Die Busse 10', 12' weisen je zwei Leitungsadern auf. Bei zwei Bussen 10', 12' ergeben sich im Vergleich zu der in Fig. 1 dargestellten Anordnung doppelt so viele Busanschlüsse, Buseingänge, Busausgänge, Leiterbahnen zwischen Buseingängen und Busausgängen, Stichleitungen und Leitungsadern zwischen den Teilnehmern. Es ist möglich, die Busse 10', 12' zwischen den Teilnehmern auf verschiedenen Wegen zu verlegen, um zu verhindern, dass sich Beschädigungen, z. B. mechanischer Art, auf beide Busse zugleich auswirken.

Das Bussystem kann insbesondere als Multi-Master-Bussystem ausgebildet sein und besteht in diesem Fall aus zweikanaligen Teilnehmern, die an einen einkanaligen Bus angeschlossen sind. Durch den aktiven Busteilnehmer am Ende des Busses kann der Fehler "Unterbrechung der Leitung, innerhalb eines Teilnehmers" mit nur zwei Busteilnehmern und daher sehr schnell festgestellt werden.

Alle Busteilnehmer sind aktiv, d.h. sie senden selbständig (Multi-Master-System). Es wird die Datenverarbeitung im Master ausgeführt. Alle Busteilnehmer senden selbständig periodisch ihre Statusmeldungen. Ereignisse (z.B. Änderung von Eingangszuständen) werden sofort ohne Zeitverlust übertragen.

Bedingt durch die Fehlertoleranzzeit (Erstfehlereintrittszeit) des Systems (es muss innerhalb von z.B. 20 ms sicher abgeschaltet werden können) muss somit eine Busunterbrechung in dieser Zeit sicher erkannt werden.

Wird der Bus als Strang ausgelegt, und nur noch das 1. Modul (Master = Auswerteeinheit mit Kundenprogramm) und das letzte Modul (Busabschluss) senden ihre Statusmeldungen alle 10 ms, die übrigen Module alle 100 ms, müssen nur noch wenige Statusmeldungen pro Sekunde übertragen werden. Der Bus ist somit frei für Ereignisse.

Eine Busunterbrechung kann bei dem als Strang ausgelegten Bussystem von allen Teilnehmern an fehlenden Statusmeldungen des Masters bzw. des Busabschlusses erkannt werden.

Bei einem Defekt an einem Busteilnehmer mit langsamen Statusmeldungen, muss von der Zweitfehlereintrittszeit ausgegangen werden, da durch die konsequente Zweikanaligkeit ein Ausfall eines Bauteils keinesfalls ein ganzes Modul funktionsunfähig werden kann.

Während es nur einen einkanaligen Bus gibt, enthält jedes Modul 2 Busknoten. Die Daten auf den Busleitungen sind äquivalent. Statusmeldungen werden in jedem Knoten generiert. Es wird bei Initialisierung des Systems in jedem Knoten ein Zähler gestartet, der nach jeder Meldung inkrementiert wird. Zusätzlich wird noch ein Kontrollbyte übertragen.

Die beiden Knoten eines Bus-Moduls überwachen unabhängig voneinander die Statusmeldungen die auf dem Bus übertragen werden. Zusätzlich ist eine galvanisch getrennte Verbindung (Link) zwischen den Knoten vorhanden, über die Betriebs- bzw. Fehlermeldungen ausgetauscht werden.

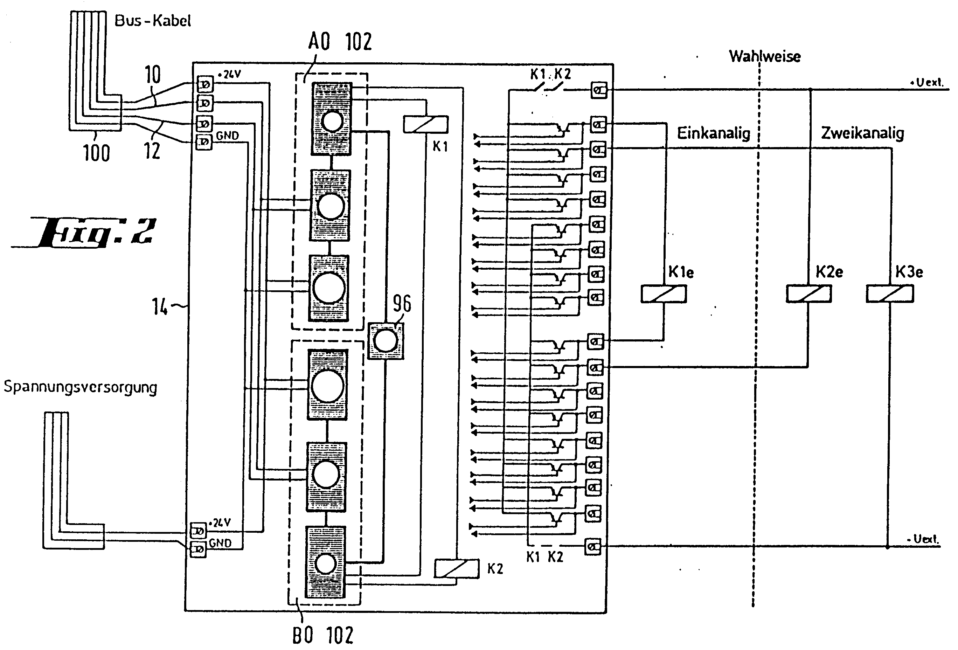

Bei dem in Fig. 2 dargestellten zentralen Busteilnehmer 14 ist der Anschluss eines Buskabels 100 mit den Leitungsadern 10, 12 dargestellt. Das Buskabel 100 enthält auch nicht näher bezeichnete Stromversorgungsleitungen. Im zentralen Busteilnehmer 14 ist in zwei vorzugswiese gleichen Einheiten A0, B0 je eine CPU 102 vorhanden.

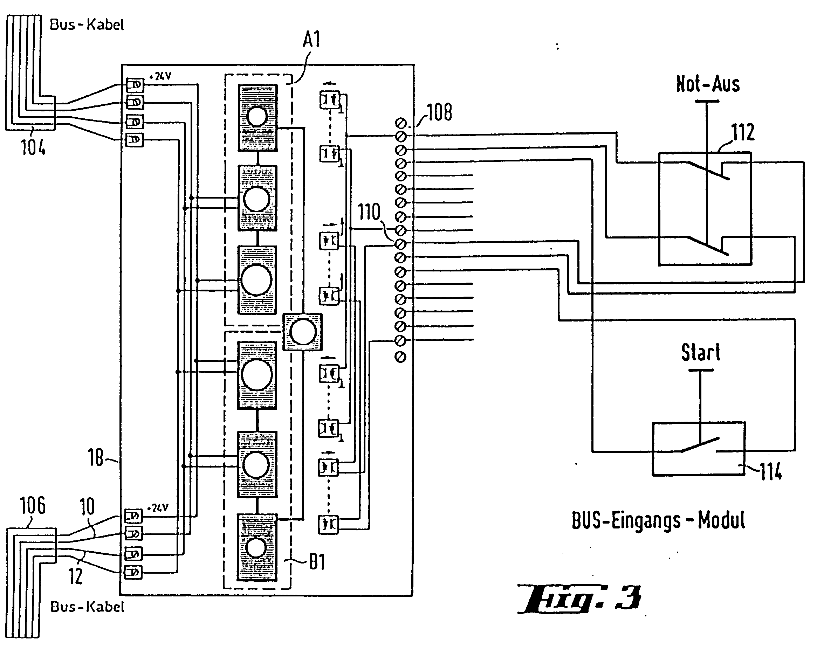

Die Fig. 3 zeigt einen als Eingangsmodul ausgebildeten Busteilnehmer 18, der mit Klemmen, die nicht näher bezeichnet sind, an die Buskabel 104, 106 angeschlossen sind, die jeweils die Leitungsadern 10, 12 und Stromversorgungsleitungen aufweisen. Das Eingangsmodul 18 weist Eingänge 108, 110 usw. für Schalter auf, von denen in Fig. 3 ein Not-Ausschalter 112 und ein Startschalter 114 dargestellt sind. Die Eingänge 108, 110 usw. sind z.B. als Klemmen ausgebildet, die über galvanische Trennstrecken mit den Einheiten des Busteilnehmers 18 verbunden sind.

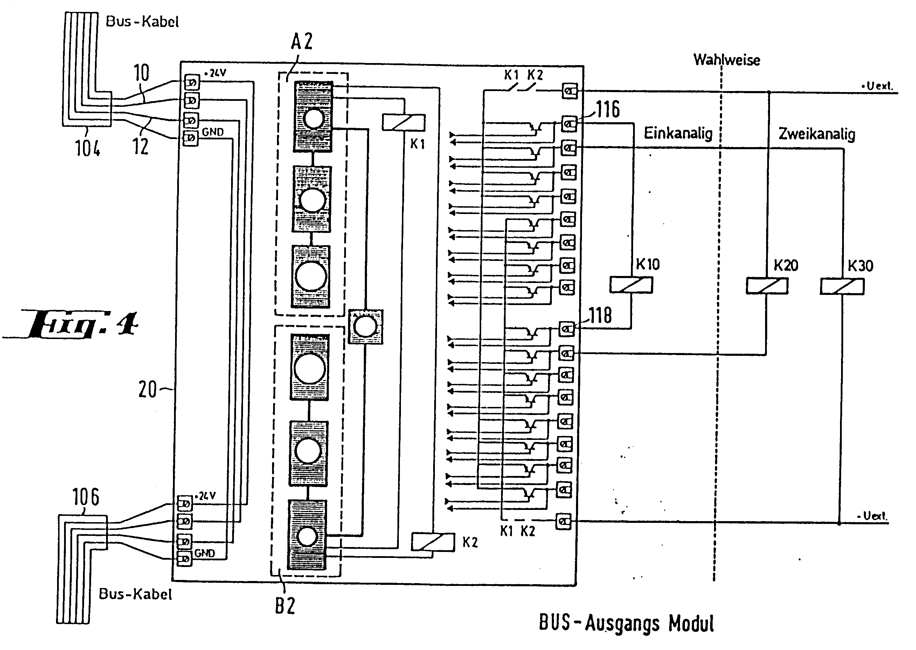

Bei dem in Fig. 4 dargestellten Ausgangs- bzw. Ausgabemodul 20 sind wiederum Buskabel 104, 106 mit Datenleitungen 10, 12 und nicht näher bezeichneten Stromversorgungsleitungen an den Busteilnehmer 20 angeschlossen. Es sind Schütze K1o, K2o, K3o als Aktoren mit dem Busteilnehmer 20 verbunden.

Während die Klemmen für Sensoren an den Eingangsmodulen nur einmal vorhanden und innerhalb der Module galvanisch getrennt auf die beiden Knoten aufgeteilt sind, sind die Ausgänge z.B. 116, 118 für die Aktoren galvanisch getrennt, Kanal 1 NPN schaltend, Kanal 2 PNP schaltend, auf zwei unterschiedliche Klemmen gelegt.

Die von einem Modul (bzw. einem Knoten des Moduls) erzeugten Fehlermeldungen werden allen Teilnehmern gleichzeitig mitgeteilt. Die Verarbeitung der Fehlermeldungen wird in jedem Modul unabhängig vorgenommen.

Bedingt durch die vorgeschriebene externe, als Strang verlegte, Busleitung und die vorgegebene innere Verdrahtung der Busleitung kann dahingehend ein Fehlerausschluss gemacht werden, dass eine zerstörte Busleitung nicht innerhalb der Fehlertoleranzzeit des Systems erkannt wird.

## Patentansprüche

1. Bussystem umfassend einen ein Übertragungsmedium (10, 12) aufweisenden seriellen Datenbus mit an einem Ende vorhandenen ersten aktiven Busteilnehmer (14) und am anderen Ende vorhandenen zweiten aktiven Busteilnehmer (16) sowie von dem Übertragungsmedium physisch durchgeschleifte weitere Busteilnehmer (18, 20),
wobei zumindest der erste aktive Busteilnehmer (14) und/oder der zweite aktive Busteilnehmer (16) jeweils eine Anordnung zum regelmäßigen Aussenden und/oder Empfangen von Statusmeldungen aufweist,
wobei zumindest von einem der Busteilnehmer (14, 16, 18, 20) die von einem anderen Busteilnehmer (14, 16, 18, 20) ausgehenden Statusmeldungen auf Ausbleiben innerhalb einer vorgegebenen Zeitspanne oder auf Abweichung von einer einem fehlerfreien Zustand des Bussystems zugeordneten Form überprüft werden und
wobei dann, wenn der Empfang der Statusmeldungen innerhalb der vorgegebenen Zeitspanne ausbleibt oder Statusmeldungen empfangen werden, die von einer einen fehlerfreien Zustand des Bussystems zugeordneten Form abweichen, das Bussystem in einen Zustand versetzt wird, der ein vorgegebenes Sicherheitskriterium erfüllt.

2. Bussystem nach Anspruch 1,
**dadurch gekennzeichnet,**
dass der erste aktive Busteilnehmer (14) die Statusmeldungen des zweiten aktiven Busteilnehmers (16) überwacht oder umgekehrt.

3. Bussystem nach Anspruch 1 oder 2,
**dadurch gekennzeichnet,**
dass die weiteren Busteilnehmer (18, 20) die von den anderen Busteilnehmern (14, 16, 18, 20) ausgehenden Statusmeldungen oder Statusmeldungen, die von einer einen fehlerfreien Zustand des Übertragungsmediums zugeordneten Form abweichen, überwachen.

4. Bussystem nach einem oder mehreren der vorhergehenden Ansprüche,
**dadurch gekennzeichnet,**
dass das Übertragungsmedium zwei Leitungsadern (10, 12) aufweist.

5. Bussystem nach einem oder mehreren der vorhergehenden Ansprüche,
**dadurch gekennzeichnet,**
dass zumindest einige der Busteilnehmer (14, 16, 18, 20) zwei sich gegenseitig überwachende Einheiten (A1, B1, A2, B2, A_{N}, B_{N}) umfassen.

6. Bussystem nach einem oder mehreren der vorhergehenden Ansprüche,
**dadurch gekennzeichnet,**
dass zumindest einige der Busteilnehmer (14, 16, 18, 20) als Module mit zwei sich gegenseitig überwachenden Einheiten (A1, B1, A2, B2, A_{N}, B_{N}) ausgebildet sind, die vorzugsweise an Sensoren und/oder Aktoren angeschlossen sind.

7. Bussystem nach einem oder mehreren der vorhergehenden Ansprüche,
**dadurch gekennzeichnet,**
dass die an den Enden einer Datenleitung vorhandenen ersten und zweiten aktiven Busteilnehmer (14, 16) jeweils einen Datenleitungsanschluss (22, 24, 26, 28) und die weiteren Busteilnehmer (18, 20) jeweils einen Datenleitungseingang (30, 32; 34, 36) und einen Datenleitungsausgang (38, 40; 42, 44) aufweisen und dass elektrische Verbindungen (46, 50; 52, 54) der Datenleitung zwischen Eingang und Ausgang jeweils zumindest als eine elektrische Verbindung, vorzugsweise in Form einer auf einer Leiterplatte angeordneten Leiterbahn ausgebildet sind.

8. Bussystem nach einem oder mehreren der vorhergehenden Ansprüche,
**dadurch gekennzeichnet,**
dass in den Busteilnehmern (14, 16, 18, 20) jeweils zwei intelligente Bus-Controller-Bausteine (56, 58; 60, 62; 92, 94) durch Stichleitungen (64, 66; 68, 70; 72, 74; 76, 78) unabhängig voneinander mit den elektrischen Verbindungen (46, 50; 52, 54) der Datenleitung (10, 12) verbunden sind.

9. Bussystem nach einem oder mehreren der vorhergehenden Ansprüche,
**dadurch gekennzeichnet,**
dass die Stichleitungen (64, 66, 68, 70, 72, 74, 76, 78) und die elektrischen Verbindungen (46, 50, 52, 54) der Busse (10', 12') oder des Busses (10, 12) derart in den Busteilnehmern (14, 16, 18, 20) angeordnet sind, dass bei Beschädigungen eine gleichzeitige Unterbrechung bzw. gleichzeitiger Kurzschluss unterbleibt.

10. Bussystem nach einem oder mehreren der vorhergehenden Ansprüche,
**dadurch gekennzeichnet,**
dass im ersten aktiven Busteilnehmer (14) die beiden vorzugsweise gleichen Einheiten (A0, B0) mit einer galvanisch getrennten Verbindung (96) wie Opto-Koppler verbunden sind, die Ausgänge zu einer Relaisebene oder zu einer äquivalenten sicheren Abschaltebene aufweist.

11. Bussystem nach einem oder mehreren der vorhergehenden Ansprüche,
**dadurch gekennzeichnet,**
dass zwischen den beiden vorzugsweise gleichen Einheiten (A1, B1, A2, B2, A_{N}, B_{N}, A0, B0) eine galvanisch getrennte Verbindung zur Übertragung von Betriebs- und Fehlermeldungen vorgesehen ist.

12. Bussystem nach einem oder mehreren der vorhergehenden Ansprüche,
**dadurch gekennzeichnet,**
dass Anschlüsse für Sensoren an den Busteilnehmern (14, 16, 18, 20) je Sensoranschluss einmal vorhanden sind und dass die Anschlüsse unter galvanischer Trennung mit den beiden Einheiten der Busteilnehmer (18, 20) verbunden sind.

13. Bussystem nach einem oder mehreren der vorhergehenden Ansprüche,
**dadurch gekennzeichnet,**
dass Ausgänge für Aktoren galvanisch getrennt auf jeweils vorzugsweise zwei Klemmen gelegt sind.

14. Verfahren zum Betreiben eines Bussystems umfassend einen ein Übertragungsmedium aufweisenden seriellen Datenbus mit an einem Ende vorhandenen ersten aktiven Busteilnehmer und am anderen Ende vorhandenen zweiten aktiven Busteilnehmer sowie von dem Übertragungsmedium physisch durchgeschleifte weitere Busteilnehmer,
wobei der erste und/oder zweite aktive Busteilnehmer regelmäßig mit einer vorgegebenen hohen Taktrate Statusmeldungen auf den seriellen Bus aussendet und/oder empfängt und
wobei dann, wenn der Empfang der Statusmeldungen innerhalb einer vorgegebenen Zeitspanne in zumindest einem der Busteilnehmer unterbleibt oder von zumindest einem der Busteilnehmer Statusmeldungen empfangen werden, die von einer einem fehlerfreien Zustand des Übertragungsmediums zugeordneten Form abweichen, das Bussystem in einen einem Sicherheitskriterium zugeordneten Zustand versetzt wird.

15. Verfahren nach Anspruch 14,
**dadurch gekennzeichnet,**
dass der die Statusmeldungen empfangende Busteilnehmer zumindest einer der aktiven Busteilnehmer ist.

16. Verfahren nach Anspruch 14,
**dadurch gekennzeichnet,**
dass die vorgegebene Zeitspanne 140ms oder weniger beträgt, vorzugsweise ≤ 20ms.

17. Verfahren nach Anspruch 14,
**dadurch gekennzeichnet,**
dass die Taktrate der Statusmeldungen des ersten und/oder zweiten aktiven Busteilnehmers (14, 16) im Verhältnis zu den Taktraten der weiteren Busteilnehmer (18, 20) realtiv hoch ist, vorzugsweise im Verhältnis 10:1 bis 20:1.

18. Verfahren nach Anspruch 14,
**dadurch gekennzeichnet,**
dass die vom ersten aktiven Busteilnehmer gesendeten Statusmeldungen beim Empfang im zweiten aktiven Busteilnehmer von diesem auf den Bus zum ersten aktiven Busteilnehmer zurückübertragen werden und umgekehrt.

19. Verfahren nach Anspruch 14,
**dadurch gekennzeichnet,**
dass die vom ersten und/oder zweiten aktiven Busteilnehmer ausgesendeten Statusmeldungen von jedem Busteilnehmer überwacht werden und dass bei Ausbleiben einer Statusmeldung innerhalb der vorgegebenen Zeitspanne oder Abweichung von einer einem fehlerfreien Zustand des Bussystems zugeordneten Form überprüft werden und wobei dann, wenn der Empfang der Statusmeldungen innerhalb einer vorgegebenen Zeitspanne in zumindest einem der Busteilnehmer unterbleibt oder von zumindest einem der Busteilnehmer Statusmeldungen empfangen werden, die von einer einem fehlerfreien Zustand des Übertragungsmediums zugeordneten Form abweichen, das Bussystem in einen einem Sicherheitskriterium zugeordneten Zustand versetzt wird.

20. Verfahren zur Überwachung eines Übertragungsmediums eines seriellen Bussystems mit an einem Ende vorhandenen ersten aktiven Busteilnehmer und am anderen Ende vorhandenen zweiten aktiven Busteilnehmer sowie von dem Übertragungsmedium physisch durchgeschleifte weitere Busteilnehmer,
wobei der erste und/oder zweite aktive Busteilnehmer regelmäßig mit einer vorgegebenen hohen Taktrate Statusmeldungen auf den seriellen Bus aussendet und/oder empfängt und
wobei dann, wenn der Empfang der Statusmeldungen innerhalb einer vorgegebenen Zeitspanne in zumindest einem der aktiven Busteilnehmer unterbleibt oder von zumindest einem der aktiven Busteilnehmer Statusmeldungen empfangen werden, die von einer einem fehlerfreien Zustand des Übertragungsmediums zugeordneten Form abweichen, das Bussystem in einen einem Sicherheitskriterium zugeordneten Zustand versetzt wird.
